## Europäisches Patentamt

## European Patent Office

## Office européen des brevets

(11) Veröffentlichungsnummer: **0 098 987**
**B1**

(12) # EUROPÄISCHE PATENTSCHRIFT

(45) Veröffentlichungstag der Patentschrift:
**19.04.89**

(21) Anmeldenummer: **83105850.8**

(22) Anmeldetag: **15.06.83**

(51) Int. Cl.⁴: **B 23 B 29/034**

(54) Einrichtung zum radialen Verstellen eines Ausbohrwerkzeuges.

(30) Priorität: **14.07.82 DE 3226244**

(43) Veröffentlichungstag der Anmeldung:
**25.01.84 Patentblatt 84/4**

(45) Bekanntmachung des Hinweises auf die Patenterteilung:
**19.04.89 Patentblatt 89/16**

(84) Benannte Vertragsstaaten:
**AT CH FR GB IT LI**

(56) Entgegenhaltungen:
**WO-A-83/02739**
**DE-A-2 933 063**
**FR-A-1 417 477**
**FR-A-2 481 625**
**US-A-3 492 894**
**US-A-3 613 192**

(73) Patentinhaber: **Friedrich Deckel Aktiengesellschaft, Plinganserstrasse 150, D-8000 München 70 (DE)**

(72) Erfinder: **Geiger, Michael, Ina- Seidl- Weg 8, D-8130 Starnberg (DE)**

EP 0 098 987 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft eine Einrichtung gemäß dem Oberbegriff des Anspruches 1.

Bei den ständig steigenden Anforderungen an die Bearbeitungsgenauigkeit moderner Werkzeugmaschinen ist es beispielsweise erforderlich, den Werkzeugverschleiß von Bohrstangen zu überwachen und bei Erreichen eines bestimmten Ausmaßes durch radiale Verstellung der Schneide auszugleichen.

Die DE-OS-2 933 063 zeigt bereits eine Einrichtung der im Oberbegriff des neuen Anspruches 1 in der Fassung A genannten Art mit einer Spindel, einem in diese konzentrisch einsetzbaren Werkzeugschaft und einer in den Werkzeugschaft einsetzbaren, zur Spindelachse einen radialen Versatz aufweisenden Bohrstange. Diese Anordnung ist besonders einfach, da die Werkzeugspindel gegenüber herkömmlichen Spindeln völlig unverändert bleiben kann und weil ebenso herkömmliche Bohrstangen verwendbar sind. Lediglich der Werkzeugschaft ist an die zu lösende Aufgabe angepaßt, indem die stirnseitige Ausnehmung zur Aufnahme der Bohrstange zur Spindelachse exzentrisch ausgebildet ist.

Bei der bekannten Lösung wird die Verdrehung der Bohrstange im Werkzeugschaft durch einen aufwendigen, teuren Schneckenantrieb bewirkt. Um das Werkzeug radial zu verstellen, muß die Spindel angehalten und der Schneckenantrieb manuell betätigt werden. Da vor allem bei modernen NC-Werkzeugmaschinen mit automatischem Werkzeugwechsel die Spindel selbst für den Bedienungsmann kaum noch zugänglich ist, muß im allgemeinen das ganze Werkzeug ausgebaut werden, um die Verstellung durchführen zu können. Es handelt sich bei der bekannten Konstruktion demnach um eine technisch aufwendige und in der Handhabung unpraktische Konstruktion.

Es ist jedoch auch schon bekannt, die Bohrstange in der Spindelaufnahme um eine etwa quer zur Spindelachse stehende Achse kippbar anzuordnen. Dazu greift am spindelseitigen Ende der Bohrstange bzw. des diese haltenden Werkzeugkegels ein Keil an, der dieses Ende in eine Richtung quer zur Spindelachse drückt, so daß das Werkzeugende der Bohrstange entgegengesetzt exzentrisch versetzt wird. Die Betätigung des Keils erfolgt durch die hohle Spindel hindurch von einer am werkzeugabgewandten Ende der Spindel angeordneten Betätigungsvorrichtung aus. Da auch die eigentliche Werkzeugspannung in der Spindel durch diese hindurch erfolgt, ergibt sich insgesamt eine äußerst aufwendige, teuere Konstruktion.

Es ist die Aufgabe der vorliegenden Erfindung, eine Einrichtung der gattungsgemäßen Art zu schaffen, welche ohne Ausbau des Werkzeuges aus der Spindel eine radiale Verstellung mit gegenüber der bekannten Lösung konstruktiv einfachen Mitteln erlaubt.

Diese Aufgabe ist erfindungsgemäß durch die im Kennzeichen des neuen Anspruches 1 in der Fassung A enthaltenen Merkmale gelöst.

Man macht sich dabei die Tatsache zunutze, daß ohnehin ein Drehantrieb für die Spindel vorhanden ist. Nach Lösen der Drehverbindung zwischen Werkzeugschaft und Bohrstange und nach Drehfixierung der letzteren kann die für die radiale Verstellung des Werkzeuges erforderliche relative Verdrehung durch den Spindelantrieb bewerkstelligt werden.

Bei der Drehung der Bohrstange um eine exzentrisch und/oder geneigt zur Spindelachse angeordnete Einstellachse ändert sich die Exzentrizität der Bohrstahlschneide. Diese Exzentrizitätsänderung ist z. B. für den Ausgleich des Verschleißes ausreichend. Die Drehung der Spindel gegenüber der fixierten Bohrstange gemäß der Erfindung ist eine sehr einfach durchzuführende Maßnahme, die vor allem ohne gesonderte Verstelleinrichtungen sowie ohne Durchgriff durch die Spindel bewerkstelligt werden kann. Alle dazu erforderlichen Bewegungen können erfindungsgemäß durch die ohnehin vorhandenen Stellantriebe durchgeführt werden. Insbesondere bei NC-gesteuerten Maschinen ergibt sich die Möglichkeit, die Spindel durch die Positionierantriebe in eine Arretierposition zu verfahren, in der die Bohrstange durch formschlüssige Verbindung mit einem Haltestück drehfest arretiert wird. Nach Lösen der Werkzeugspannvorrichtung wird sodann die Spindel durch den Spindelantrieb verdreht, wobei sich die Exzentrizität der Bohrstahlschneide im Sinne eines Ausgleichs der Schneidenabnutzung ändert. Die Mittel zur Drehfixierung der Bohrstange müssen so ausgelegt sein, daß sie die radiale Bewegung der Bohrstange nicht behindern. Anschließend wird das Werkzeug wieder gespannt. Auf diese Weise läßt sich der ganze Vorgang NC-gesteuert durchführen, wobei der Befehl zur Durchführung der Verstellung beispielsweise von einer Meßeinrichtung ausgehen kann, welche das Werkstück oder das Werkzeug ausmißt.

Die Bohrstange ist bei exzentrischer Anordnung drehbar z. B. in einem zur Spindelachse exzentrisch angeordneten, an einem genormten Werkzeugkegel ausgebildeten Drehlager oder dergleichen angeordnet. Die Änderung der Exzentrizität ist außer von der gewählten Ausgangsexzentrizität nur vom Verdrehwinkel abhängig.

Bei geneigter Anordnung ist die Bohrstange drehbar in einem zur Spindelachse geneigten, an einem genormten Werkzeugkegel ausgebildeten Drehlager angeordnet. Bei dieser Anordnung hängt die Ausgangsexzentrizität außer vom Neigungswinkel zusätzlich noch von der Bohrstangenlänge ab.

Es ist auch eine Kombination von exzentrischer und geneigter Lage der Einstellachse denkbar.

Die WO-A-83/02 739 beschreibt eine Einrichtung die alle Merkmale vom Anspruch 1 der Fassung A aufweist. Diese Veröffentlichung zählt gemäß Artikel 54(3) EPÜ hinsichtlich Neuheit zum Stand der Technik. Für die Verträgsländer FR und GB gelten daher die Ansprüche 1 - 3 der Fassung B.

Weitere Ausgestaltungen der Erfindung ergeben sich aus den Ansprüchen, der Beschreibung sowie der Zeichnung. Mehrere Ausführungsbeispiele der Erfindung sind in der Zeichnung dargestellt und im folgenden näher beschrieben. Es zeigen:

Fig. 1 einen Längsschnitt durch eine Werkzeugmaschinenspindel mit exzentrisch angeordneter Bohrstange;

Fig. 2 einen Längsschnitt durch eine Werkzeugmaschinenspindel mit geneigt angeordneter Bohrstange.

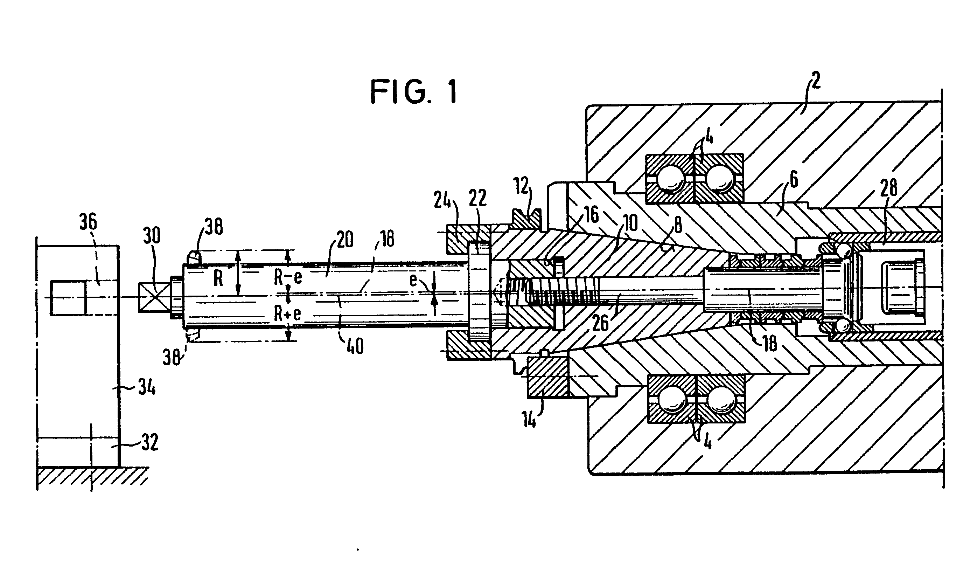

Fig. 1 zeigt ein Spindelgehäuse 2, in welchem über Kugellager 4 eine Werkzeugmaschinenspindel 6 drehbar gelagert ist. Die Spindel 6 ist mit einem nicht dargestellten Drehantrieb verbunden.

In der Werkzeugaufnahme 8 der Spindel 6 ist ein Werkzeugkegel 10 angeordnet, welcher beispielsweise durch einen nicht dargestellten automatischen Werkzeugwechselarm aus einem Werkzeugmagazin in die Spindel eingewechselt werden kann. Der Wechselarm greift an einem Nutenring 12 an, welcher den Werkzeugkegel umgibt. Ein in eine Unterbrechung des Nutenringes 12 eingreifender Mitnehmerstein 14 gewährleistet eine formschlüssige Verbindung zwischen Spindel 6 und Kegel 10 in Drehrichtung.

Der Werkzeugkegel 10 weist eine stirnseitige Bohrung 16 auf, welche um einen Betrag e exzentrisch zur Achse 18 der Spindel 10 angeordnet ist. In dieser Bohrung ist das spindelseitige Ende einer Bohrstange 20 aufgenommen. Die Bohrstange 20 wird über einen an dieser ausgebildeten Flansch 22 sowie einen gegen die Stirnseite der Spindel 6 anschraubbaren Halterung 24 im Werkzeugkegel axial gehalten, so daß er diesem gegenüber nur noch drehbar ist.

In das spindelseitige Ende der Bohrstange 20 ist ein Verlängerungsstück 26 eingeschraubt, welches durch den Werkzeugkegel 10 hindurchragt und an welchem eine übliche, in der hohlen Spindel 6 angeordnete Spannstange 28 angreift. Die Spannstange 28 zieht über das Verlängerungsstück 26 die Bohrstange 20 und damit den Werkzeugkegel 10 in die Werkzeugaufnahme 8 ein, so daß die Bohrstange 20 fest mit der Spindel 10 verbunden ist.

Am vorderen Ende der Bohrstange 20 ist ein Vierkant 30 angeordnet, welcher dazu dient, die Bohrstange drehfest gegenüber dem Maschinengestell 32 zu fixieren. Dazu ist an einer beliebigen Stelle, z. B. auf dem Arbeitstisch der Maschine innerhalb des Arbeitsbereiches der Spindel, ein Haltestück 34 befestigt, welches eine zum Vierkant 30 etwa komplementäre Ausnehmung 36 aufweist. Die Innenweite der Ausnehmung 36 ist etwa um den Betrag des Nachstellweges des Werkzeuges größer als die Außenweite des Vierkants 30.

In der Ausgangslage, d. h. nach Einsetzen des neuen Werkzeuges zeigt der Bohrstahl 38 entgegengesetzt zur Exzentrizität e, so daß der Flugkreis der Schneide des Bohrstahls, welche von der Bohrstahlachse 40 den Abstand R hat, den Radius R - e hat. Durch eine relative Drehung der Bohrstange 20 im Werkzeugkegel 10 um 180° gelangt der Bohrstahl 38 in die gestrichelt dargestellte Lage, in der die Schneide von der Spindelachse 18 den Abstand R + e hat, so daß eine Schneidenabnutzung bis zu 2e kontinuierlich kompensiert werden kann.

Die Verstellung erfolgt in der Weise, daß die Spindel durch die Steuerung der Maschine so verfahren wird, daß der Vierkant 30 in der Ausnehmung 36 aufgenommen wird. Nach Lösen der Spannstange 28 wird die Spindel 10 verdreht, so daß die Schneide des Bohrstahls 38 bezüglich der Spindelachse nach außen wandert; der Verdrehwinkel wird so gesteuert, daß diese Schneidenwanderung der gemessenen Abnutzung entspricht.

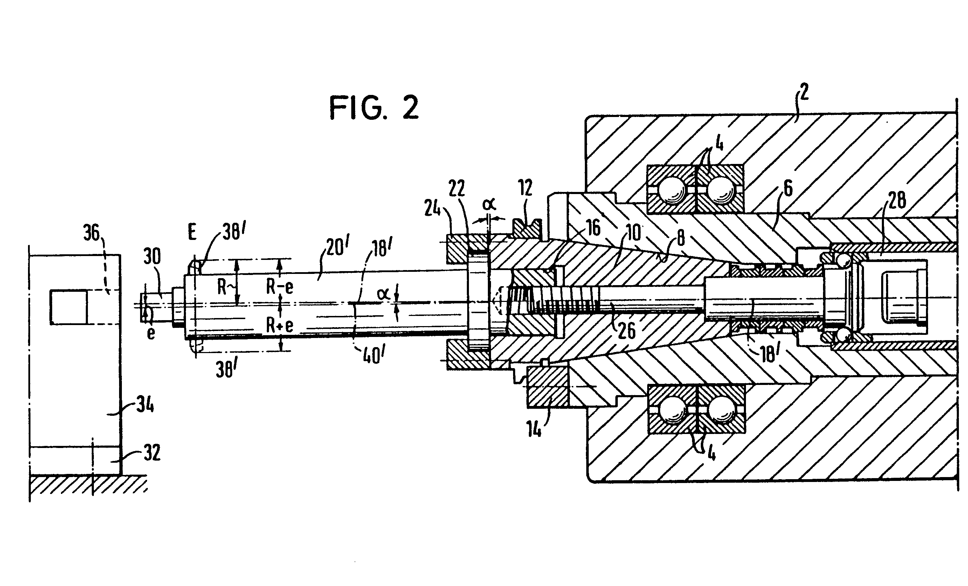

Fig. 2 zeigt eine Anordnung etwa gemäß Fig. 1, wobei jedoch die Bohrstange 20' nicht exzentrisch, sondern in einem Winkel α zur Spindelachse 18' geneigt angeordnet ist. Dadurch ergibt sich in der Ebene E des Bohrstahls 38' ebenfalls eine Exzentrizität e, welche beim neuen Werkzeug der Richtung des Bohrstahls 38' entgegengesetzt ist. Der Flugkreis der Bohrstahlschneide ist dann wiederum R - e (mit R als dem Abstand der Bohrstahlschneide von der Bohrstangenachse 40'); nach Drehung der Bohrstange 20' um 180° hat der Bohrstahl die gestrichelt gezeichnete Lage und sein Flugkreis ist R + e, d. h. um die doppelte Exzentrizität größer, so daß ein Werkzeugverschleiß im gleichen Maße ausgleichbar ist. Mit 10' ist der Werkzeugkegel, mit 16' die darin stirnseitig ausgebildete, zur Spindelachse 18' geneigte Aufnahmebohrung zur Lagerung der Bohrstange 20' bezeichnet.

**Patentansprüche** für die Vertragsstaaten: AT, CH, IT, LI

1. Einrichtung zum radialen Verstellen eines Ausbohrwerkzeuges, umfassend eine in einem Maschinengestell gelagerte, mit einem Drehantrieb verbundene Werkzeugspindel (6) mit einer stirnseitigen, zur Spindelachse koaxialen Werkzeugaufnahme (8), ferner einen in die Werkzeugaufnahme der Spindel einsetzbaren Werkzeugschaft (10) mit einer stirnseitigen, zur Spindelachse radial (e) oder im Winkel (α) versetzten Ausnehmung (16) für die Aufnahme einer einen Bohrstahl (38) tragenden Bohrstange (20), ferner Mittel (26, 28) zum lösbaren Festspannen der Bohrstange im Werkzeugschaft und Mittel zur relativen Verdrehung der Bohrstange und des Werkzeugschaftes um die Bohrstangenachse, dadurch gekennzeichnet, daß Mittel (30, 36) zum Drehfixieren der Bohrstange (20, 20') gegenüber dem Maschinengestell (32) vorgesehen sind, welche bei Drehwinkelpositionierung der Spindel (6) die relative Verdrehung der Bohrstange (20) gegenüber dem Werkzeugschaft (10) gewährleisten und dadurch eine radiale Verstellung des Bohrstahls (38) bewirken.

2. Einrichtung nach Anspruch 1, dadurch gekennzeichnet, daß am Maschinengestell (32) im Verfahrbereich der Spindel (6) ein Haltestück (34) vorgesehen ist, mit welchem die Bohrstange (20, 20') in Drehrichtung formschlüssig kuppelbar ist.

3. Einrichtung nach Anspruch 2, dadurch gekennzeichnet, daß an der Stirnseite der Bohrstange (20, 20') ein Vierkant (30) angeordnet ist und daß am Haltestück (34) eine zum Vierkant (30) etwa komplementäre Ausnehmung (36) ausgebildet ist, wobei die Innenweite der Ausnehmung (36) mindestens um den Betrag des maximalen radialen Verstellweges der Bohrstange (20, 20') größer als die Außenweite des Vierkants (30) ist.

4. Einrichtung nach einem der Ansprüche 1 bis 3, dadurch gekennzeichnet, daß die stirnseitige Ausnehmung (16) des Werkzeugschaftes (10) und damit die Bohrstange (20) exzentrisch zur Spindelachse (18) und zu dieser parallel angeordnet sind.

5. Einrichtung nach einem der Ansprüche 1 bis 3, dadurch gekennzeichnet, daß die stirnseitige Ausnehmung (16') des Werkzeugschaftes (10') und damit die Bohrstange (20') in einem Winkel (α) zur Spindelachse (18') geneigt sind.

**Patentansprüche** für die Vertragsstaaten: FR, GB

1. Einrichtung zum radialen Verstellen eines Ausbohrwerkzeuges, umfassend eine in einem Maschinengestell gelagerte, mit einem Drehantrieb verbundene Werkzeugspindel (6) mit einer stirnseitigen, zur Spindelachse koaxialen Werkzeugaufnahme (8), ferner einen in die Werkzeugaufnahme der Spindel einsetzbaren Werkzeugschaft (10) mit einer stirnseitigen, zur Spindelachse radial (e) oder im Winkel (α) versetzten Ausnehmung (16) für die Aufnahme einer einen Bohrstahl (38) tragenden Bohrstange (20), ferner Mittel (26, 28) zum lösbaren Festspannen der Bohrstange im Werkzeugschaft, Mittel zur relativen Verdrehung der Bohrstange und des Werkzeugschaftes um die Bohrstangenachse und Mittel (30, 36) zum Drehfixieren der Bohrstange (20, 20') gegenüber dem Maschinengestell (32), welche bei Drehwinkelpositionierung der Spindel (6) die relative Verdrehung der Bohrstange (20) gegenüber dem Werkzeugschaft (10) gewährleisten und dadurch eine radiale Verstellung des Bohrstahls (38) bewirken, und welche ein am Maschinengestell (32) im Verfahrbereich der Spindel (6) vorgesehenes Haltestück (34) umfassen, mit welchem die Bohrstange (20, 20') gegen Verdrehen kuppelbar ist, wobei an der Stirnseite der Bohrstange (20, 20') ein Vierkant (30) angeordnet ist und am Haltestück (34) eine zum Vierkant (30) etwa komplementäre Ausnehmung (36) derart ausgebildet ist, daß die Innenweite der Ausnehmung (36) mindestens um den Betrag des maximalen radialen Verstellweges der Bohrstange (20, 20') größer als die Außenweite des Vierkants (30) ist.

2. Einrichtung nach Anspruch 1, dadurch gekennzeichnet, daß die stirnseitige Ausnehmung (16) des Werkzeugschaftes (10) und damit die Bohrstange (20) exzentrisch zur Spindelachse (18) und zu dieser parallel angeordnet sind.

3. Einrichtung nach einem der Ansprüche 1 und 2, dadurch gekennzeichnet, daß die stirnseitige Ausnehmung (16') des Werkzeugschaftes (10') und damit die Bohrstange (20') in einem Winkel (α) zur Spindelachse (18') geneigt sind.

**Claims** for the contracting states: AT, CH, IT, LI

1. Device for radially adjusting a boring tool, comprising a tool spindle (6) which is mounted in a machine frame and connected to a rotary drive, the tool spindle having a tool (8) reception opening disposed at the front end and coaxially with the spindle axis, a tool shank (10) adapted to be inserted in the tool reception opening of the spindle and provided at the front end with a recess (16) which is radially offset (e) or at an angle (α) with respect to the spindle axis, for holding a boring bar (20) supporting a boring cutter (38), means (26, 28) for clamping the boring bar in the tool shank in a releasable manner and means for relatively turning the boring bar and the tool shank about the boring bar axis, characterized in that means (30, 36) for fixing the boring bar (20, 20') against rotation with respect to the machine frame (32) are provided which ensure that in angularly positioning the spindle (6), a relative angular displacement of the boring bar (20) with respect to the tool shank (10) and a radial displacement of the boring cutter (38) is achieved.

2. Device according to claim 1, characterized in that a fixing element (34), by means of which the boring bar (20, 20') can be posititvely coupled in the sense of rotation is provided on the machine frame (32) in the working range of the spindle.

3. Device according to claim 2, characterized in that a square part (30) is arranged at the front end of the boring bar (20, 20') and that a recess (36) which is approximately complementary to the square part (30), is formed at the fixing element (34), the inner width of the recess (36) being greater than the outer width of the square part (30) by at least the length of the maximum radial adjustment path of the boring bar (20, 20').

4. Device according to one of claims 1 to 3, characterized in that the recess (16) in the front end of the tool shank (10) and thus the boring bar (20) are arranged eccentrically with respect to the spindle axis (18) and parallel to the latter.

5. Device according to one of claims 1 to 3, characterized in that the recess (16) in the front end of the tool shank (10') and thus the boring bar (20') are inclined at an angle ($\alpha$) with respect to the spindle axis (18').

**Claims** for the contracting states: FR, GB

1. Device for radially adjusting a boring tool, comprising a tool spindle (6) which is mounted in a machine frame and connected to a rotary drive, the tool spindle having a tool (8) reception opening disposed at the front end and coaxially with the spindle axis, a tool shank (10) adapted to be inserted in the tool reception opening of the spindle and provided at the front end with a recess (16) which is radially offset (e) or at an angle ($\alpha$) with respect to the spindle axis, for holding a boring bar (20) supporting a boring cutter (38) means (26, 28) for clamping the boring bar in the tool shank in a releasable manner and means for relatively turning the boring bar and the tool shank about the boring bar axis, and means (30, 36) for fixing the boring bar (20, 20') against rotation with respect to the machine frame (32) which ensure that in angularly positioning the spindle (6), a relative angular displacement of the boring bar (20) with respect to the tool shank (10) and a radial displacment of the boring cutter (38) is achieved, and which comprise a fixing element (34) by means of which the boring bar (20, 20') can be coupled against turning and which is provided on the machine frame (32) in the working range of the spindle (6), a square part (30) being arranged at the front end of the boring bar (20, 20') and a recess (36) which is approximately complementary to the square part (30) being formed in the fixing element (34) such that the inner width of the recess (36) is greater than the outer width of the square part (30) by at least the length of the maximum radial adjustment path of the boring bar (20, 20').

2. Device according to claim 1, characterized in that the recess (16) in the front end of the tool shank (10) and thus the boring bar (20) are arranged eccentrically with respect to the spindle axis (18) and parallel to the latter.

3. Device according to one of claims 1 and 2, characterized in that the recess (16') in the front end of the tool shank (10') and thus the boring bar (20') are inclined at an angle ($\alpha$) with respect to the spindle axis (18').

**Revendications** pour les états contractants: AT, CH, IT, LI

1. Appareil pour le réglage radial d'un outil d'alésage comprenant un arbre d'outil (6) monté rotatif dans un bâti de machine et relié à un dispositif d'entraînement en rotation, l'arbre étant muni sur sa face frontale d'un logement d'outil (8) coaxial à l'axe de l'arbre, et une tige d'outil (10) destinée à être insérée dans le logement d'outil de l'arbre et comportant sur sa face frontale un évidement (16) décalé radialement (<u>e</u>) par rapport à l'axe de l'arbre ou incliné d'un angle ($\alpha$) par rapport à celui-ci, l'évidement (16) étant destiné à recevoir une barre d'alésoir (20) portant un outil d'alésage (38), et des moyens (26, 28) destinés à la fixation détachable de la barre d'alésoir dans la tige d'outil et des moyens destinés au déplacement angulaire relatif de la barre d'alésoir et de la tige d'outil autour de l'axe de la barre d'alésoir, caractérisé en ce que des moyens (30, 36) sont fournis pour la fixation en rotation de la barre d'alésoir (20, 20') par rapport au bâti de machine (32), les moyens (30, 36) assurant, lors d'un positionnement de l'angle de rotation de l'arbre (6), le déplacement rotatif relatif de la barre d'alésoir (20) par rapport à la tige d'outil (10) et effectuant ainsi un réglage radial de l'outil d'alésage (38).

2. Appareil suivant la revendication 1, caractérisé en ce qu'un organe de fixation (34) est prévu sur le bâti de machine (32) dans la zone de déplacement de l'arbre (6), la barre d'alésoir (20, 20') pouvant être, dans le sens de rotation, accouplée audit organe de fixation par un engagement positif.

3. Appareil suivant la revendication 2, caractérisé en ce qu'un carré (30) est disposé sur la face frontale de la barre d'alésoir (20, 20') et en ce qu'un évidement (36) à peu près complémentaire au carré (30) est agencé sur l'organe de fixation (34), la largeur interne de l'évidement (36) étant supérieure à la largeur externe du carré (30) d'au moins la valeur du décalage radial maximal de la barre d'alésoir (20, 20').

4. Appareil suivant l'une des revendications 1 à 3, caractérisé en ce que l'évidement (16) sur la face frontale de la tige d'outil (10) ainsi que la barre d'alésoir (20) sont excentrés par rapport à l'axe de l'arbre (18) et s'étendent parallèlement à celui-ci.

5. Appareil suivant l'une des revendications 1 à 3, caractérisé en ce que l'évidement (16') sur la face frontale de la tige d'outil (10') ainsi que la barre d'alésoir (20') sont inclinés d'un angle ($\alpha$) par rapport à l'axe de l'arbre (18').

**Revendications** pour les états contractants: FR, GB

1. Appareil pour le réglage radial d'un outil d'alésage comprenant un arbre d'outil (6) monté rotatif dans un bâti de machine et relié à un dispositif d'entraînement en rotation, l'arbre étant muni sur sa face frontale d'un logement d'outil (8) coaxial à l'axe de l'arbre, et une tige d'outil (10) destinée à être insérée dans le logement d'outil de l'arbre et comportant sur sa face frontale un évidement (16) décalé radialement ($e$) par rapport à l'axe de l'arbre ou incliné d'un angle ($\alpha$) par rapport à celui-ci, l'évidement (16) étant destiné à recevoir une barre d'alésoir (20) portant un outil d'alésage (38), des moyens (26, 28) destinés à la fixation détachable de la barre d'alésoir dans la tige d'outil, des moyens destinés au déplacement angulaire relatif de la barre d'alésoir et de la tige d'outil autour de l'axe de la barre d'alésoir, et des moyens (30, 36) destinés à la fixation en rotation de la barre d'alésoir (20, 20') par rapport au bâti de la machine (32) et assurant, lors d'un positionnement de l'angle de rotation de l'arbre (6), le déplacement rotatif relatif de la barre d'alésoir (20) par rapport à la tige d'outil (10) et effectuant ainsi un réglage radial de l'outil d'alésage (38), lesdits moyens (30, 36) comprenant un organe de fixation (34) prévu sur le bâti de machine (32) dans la zone de déplacement de l'arbre (6), la barre d'alésoir (20, 20') pouvant être accouplée audit organe de fixation afin d'être bloquée en rotation, un carré (30) étant disposé sur la face frontale de la barre d'alésoir (20, 20') et un évidement (36) à peu près complémentaire au carré (30) étant agencé sur l'organe de fixation (34), la largeur interne de l'évidement (36) étant supérieure à la largeur externe du carré (30) d'au moins la valeur du décalage radial maximal de la barre d'alésoir (20, 20').

2. Appareil suivant la revendication 1, caractérisé en ce que l'évidement (16) sur la face frontale de la tige d'outil (10) ainsi que la barre d'alésoir (20) sont excentrés par rapport à l'axe de l'arbre (18) et s'étendent parallèlement à celui-ci.

3. Appareil suivant la revendication 1 ou 2, caractérisé en ce que l'évidement (16') sur la face frontale de la tige d'outil (10') ainsi que la barre d'alésoir (20') sont inclinés d'un angle ($\alpha$) par rapport à l'axe de l'arbre (18').

FIG. 1

FIG. 2